# EUROPÄISCHE PATENTANMELDUNG

(11) **EP 1 407 874 A1**
(43) Veröffentlichungstag der Anmeldung: **14.04.2004**
(21) Anmeldenummer: 03023008.0
(22) Anmeldetag: 11.10.2003
(51) Int. Cl.: B29C 49/48, B29C 49/72, B29C 49/16

(54) **Verfahren zum Blasformen von unrunden Hohlkörpern mit gleichförmiger Wanddickenverteilung unter Verwendung von gesteuertem Unter- und Überdruck zwischen dem Vorformling und der Werkzeugwandung**

(30) Priorität: 12.10.2002 DE 10247716
(71) Anmelder: Dr. Reinold Hagen Stiftung, 53229 Bonn-Holzlar (DE)
(72) Erfinder: Vieten, Martin, 53129 Bonn (DE)
(74) Vertreter: Müller-Gerbes, Margot, Dipl.-Ing.

(57) **Zusammenfassung**

Verfahren zum Herstellen von Hohlkörpern (H) aus einem hohlen plastifizierten Vorformling (V) aus thermoplastischem Kunststoff, bei dem der Vorformling (V) in eine Kavität (WK) eines Werkzeuges (W) eingebracht und mittels eines Aufblasmediums von innen aufgeblasen wird, und bei dem mittels eines zweiten in die Kavität (WK) zwischen Vorformling (V) und Wandung (WW) des Werkzeuges (W) eingebrachten Mediums der Vorformling (V) manipuliert wird, dergestalt, daß zur Verlangsamung der Annäherung des Vorformlings (V) an die Wandung (WW) des Werkzeuges (W) das Medium mit Überdruck eingebracht wird und in den Bereichen, denen sich der Vorformling (V) beim Aufblasen zuletzt der Wandung (WW) des Werkzeuges (W) nähert mittels des zweiten Mediums ein Unterdruck zur Beschleunigung der Annäherung erzeugt wird, so daß die Varianz der Wanddicke des erhaltenen Hohlkörpers (H) über seinen Umfang betrachtet verringert wird.

## Beschreibung

Die Erfindung bezieht sich auf ein Verfahren zum Herstellen von Hohlkörpern aus einem hohlen plastifizierten Vorformling aus thermoplastischem Kunststoff, bei dem der Vorformling in eine Kavität eines Werkzeuges eingebracht und während/und/oder nach Schließen des Werkzeuges durch Einbringen eines flüssigen oder gasförmigen Aufblasmediums unter Druck in das Innere des Vorformlings unter Volumenvergrößerung bis zur Anlage an der die Kavität begrenzenden Wandung expandiert, und bei dem der Vorformling durch ein zweites in die Kavität des Werkzeuges zwischen Vorformling und Wandung des Werkzeuges eingebrachtes flüssiges oder gasförmiges Medium positioniert wird.

Die bekannten Verfahren zur Herstellung von Hohlkörpern aus thermoplastischem Kunststoff durch Blasformen weisen mindestens die im folgenden beschriebenen Verfahrensschritte I und III oder auch die zeitlich aufeinander folgenden Verfahrensschritte I, II und III auf.
I. Herstellen eines Vorformlings
II. Einbringung des Vorformlings in ein Werkzeug
III. Ausformung des Vorformlings zu einem Hohlkörper durch Aufblasen von innen oder durch Evakuieren der Kavität zwischen Vorformling und Wandung des Werkzeuges

Die mit den bekannten Verfahren hergestellten Hohlkörper weisen entlang ihres Querschnittes nach dem Aufblasen ungleichmäßige Wanddickenverteilungen mit Materialanhäufungen aus. Ausgehend von einem Vorformling mit gleichmäßiger Wanddicke sind die hergestellten Hohlkörper in Bezug auf den Materialeinsatz nicht optimal ausgebildet. Um eine gewünschte Zielwanddicke des Hohlkörpers zu erreichen, ist es bereits bekannt, bei den für die Herstellung des Hohlkörpers benötigten Vorformlingen die Wanddicke zu manipulieren. Beispielsweise wird in der DE 198 18 519 C2 ein solches Verfahren beschrieben, bei dem der Vorformling während der Extrusion auf die notwendige Wanddicke dadurch eingestellt wird, daß der Düsenspalt axial und radial variiert wird. Diese Methode wird nicht allen gewünschten Gestalten von Hohlkörpern gerecht.

Aus der EP 0 301 694 B2 ist bereits ein Verfahren zum Blasformen von Hohlkörpern aus thermoplastischem Kunststoff bekannt, bei dem ein Vorformling in einen geschlossenen Formhohlraum eines Werkzeuges eingebracht wird und dann zum verbesserten Einführen und Gleiten des Vorformlings in den Formhohlraum Luft radial in den verbleibenden Formhohlraum zwischen Vorformling und Werkzeug geblasen wird, um das sachgemäße Laden des Vorformlings in den Formhohlraum zu gewährleisten. Anschließend wird der Vorformling durch Einwirkung von Druckluft in das Innere des Vorformlings aufgeblasen, bis er an der Wandung des Werkzeuges anliegt. Eine Beeinflussung der Ausbildung der Wanddicke während des Aufblasens des Vorformlings mittels Druckluft von innen erfolgt hierbei nicht.

In der DE 199 14 912 wird ein Verfahren zum Herstellen von Hohlkörpern aus Kunststoff durch Blasformen beschrieben, bei dem ebenfalls das Einbringen des Vorformlings in die Kavität des Werkzeuges durch Einblasen von Luft in die Kavität zwischen Vorformling und Wandung des Werkzeuges erleichtert wird, so daß der Vorformling ohne in Berührung mit der Wandung des Werkzeuges zu kommen, vollständig in die Kavität eingebracht werden kann. Wenn der Vorformling genügend weit in die Kavität eingeführt ist, wird die Öffnung, durch welche Luft eingeblasen wurde, eingeschlossen und durch die Wandung des Werkzeuges wird Luft aus der Kavität zwischen Vorformling und Wandung des Werkzeuges abgesaugt, und zwar so lange, bis der Vorformling sich an die Wandung des Werkzeuges angelegt hat und seine Endform erreicht hat.

In der DE 41 28 438 A1 wird ein gattungsgemäßes Verfahren zum Herstellen von Hohlkörpern aus thermoplastischem Kunststoff durch Aufblasen eines Vorformlings beschrieben. Der Formgebungsprozeß beginnt, sobald der Vorformling die geeignete Position innerhalb der Kavität des geschlossenen Werkzeuges eingenommen hat. Dieser Prozeß ist durch eine Ausdehnungsbewegung des Vorformlings - Hülle des Vorformlings - hin zur Wandung, welche die Kavität des Werkzeuges begrenzt, gekennzeichnet. Diese Relativbewegung erfolgt durch Eingabe eines Aufblasmediums in das Innere des Vorformlings, wodurch dieser an Oberfläche und Innenvolumen zunimmt und durch Schließen des Werkzeuges. Unter Werkzeug sind hier auch Werkzeugsegmente zu verstehen. Die Relativbewegung kann mit weiteren mechanischen Manipulationen des Vorformlings, wie z.B. Verstrecken über Spreizdorne oder Umlegen des Vorformlings durch Klappen einhergehen.

Bei der Durchführung des Aufblasvorganges gelangt in der Regel vor der vollständigen Ausformung des Vorformlings ein seitlicher Bereich desselben in Kontakt mit der die Kavität begrenzenden Wandung des Werkzeugs. Um dies zu vermeiden und eine ausreichende Beweglichkeit des Vorformlings während des Aufblasens relativ zum Werkzeug zu ermöglichen und ein frühzeitiges unerwünschtes Anlegen an die Wandung des Werkzeuges zu vermeiden, wird gemäß DE 41 28 438 A1 vorgeschlagen, daß zur Verbesserung der Beweglichkeit des Vorformlings relativ zur Kavität bzw. der die Kavität begrenzenden Wandung des Werkzeuges mindestens in einem Bereich der die Kavität begrenzenden Wandung des Werkzeuges durch Einblasen von Druckluft Luftpolster gebildet werden, welche den Vorformling beim Expandieren von der Wandung des Werkzeuges distanzieren. Hierdurch soll auch ein frühzeitiges Ende der Umfangsreckung des Vorformlings vermieden werden und eine ungleichmäßige Wanddicken- und Materialspannungsverteilung entlang des Umfanges verhindert werden. Es hat sich jedoch herausgestellt, daß bei Hohlkörpern mit stark von einer Rotationssymmetrie abweichender Form die Varianz der Wanddicke noch erheblich ist, Materialanhäufungen auftreten und damit auch keine optimale Nutzung des Materialeinsatzes für den Hohlkörper möglich ist.

Der Erfindung liegt die Aufgabe zugrunde, ein Verfahren zum Herstellen von Hohlkörpern durch Aufblasen von Vorformlingen aus thermoplastischem Kunststoff der einleitend genannten Art so zu verbessern, daß eine möglichst gleichmäßige Wanddicke und Materialverteilung über den Umfang des Hohlkörpers beim Formgebungsprozeß ermöglicht wird.

Diese Aufgabe wird bei dem gattungsgemäßen Verfahren gemäß dem Vorschlag der Erfindung dadurch erreicht, daß das zweite Medium in Teilvolumenströmen an mindestens zwei Bereichen des Werkzeuges in die Kavität eingebracht und/oder entnommen wird, und die Teilvolumenströme des zweiten Mediums einzeln in Bezug auf den zu erzeugenden Überdruck und/oder Unterdruck gesteuert werden, in der Weise, daß zur Verlangsamung der Annäherung des Vorformlings an die Wandung des Werkzeuges in den Bereichen, in denen sich der Vorformling während des Expandierens durch Einblasen von Aufblasmedium zuerst der die Kavität begrenzenden Wandung des Werkzeuges nähert, mittels des zweiten Mediums ein Überdruck erzeugt wird und in den Bereichen, in denen sich der Vorformling beim Expandieren zuletzt der die Kavität begrenzenden Wandung des Werkzeuges nähert, mittels des zweiten Mediums ein Unterdruck zur Beschleunigung der Annäherung erzeugt wird und die Annäherung des Vorformlings beim Expandieren an die die Kavität begrenzende Wandung des Werkzeuges und der Erstarrungsvorgang vergleichmäßigt wird und die Varianz der Wanddicke des durch Expandieren des Vorformlings erhaltenen Hohlkörpers über seinen Umfang hin betrachtet verringert wird.

Die im Vorformling vorhandenen Wanddicken werden durch das erfindungsgemäße Verfahren gezielt so beeinflußt, daß Materialanhäufungen vermieden werden oder aber auch gezielt an gewünschten Stellen hervorgerufen werden können. Es ist also eine Lenkung und Steuerung des Materialflusses durch die gezielte gesteuerte Kombination von Einblasen und Entnahme/Saugen des zweiten Mediums sowohl zur Vermeidung von Anhäufungen als auch zur Beeinflussung der Materialanhäufung ermöglicht. Der Vorformling wird erfindungsgemäß während der Formgebung bei sich schließendem und/oder geschlossenem Werkzeug über ein zwischen ihm und der Wandung der Kavität des Werkzeuges wirkendes weiteres - zweites - Medium positioniert und geformt und durch die gleichzeitige Volumenvergrößerung infolge des in das Innere des Vorformlings eingebrachte Aufblasmedium geformt, wobei die Formung durch das in der Kavität wirkende Medium in der Kombination des Einwirkens von Druck und Unterdruck, d.h. Aufbauen von Druckpolstern und Erzeugen von Bereichen, welche unter Vakuum stehen, erfolgt. In dem Bereich der ersten Annäherung des Vorformlings an die die Kavität begrenzende Wandung wird durch das gezielt eingebrachte Medium dem sich ausdehnenden Vorformling ein Widerstand entgegengesetzt, der die Annäherung in diesem Bereich verlangsamt.

Insbesondere ist vorgesehen, daß während des Aufblasens des Vorformlings mit Aufblasmedium eine gesteuerte Entnahme des zweiten Mediums aus der Kavität zwischen Wandung des Werkzeuges und Vorformling durchgeführt wird.

Hingegen wird in den Bereichen, in denen sich der Vorformling zeitlich später, oder zuletzt der Wandung des Werkzeuges nähert, beispielsweise in Bereichen tiefer Zerklüftungen der Kavität und starker Verreckung, der Widerstand durch gesteuerte Entnahme des zweiten Mediums - Erzeugung von Unterdruck - reduziert, um die Annäherung des Vorformlings an die Wandung des Werkzeuges zu beschleunigen. Hierfür werden gemäß einem Vorschlag der Erfindung in den Bereichen des Werkzeuges, in denen die zu manipulierenden Wanddicken des Vorformlings zur Anlage an die Wandung des Werkzeuges kommen, geeignete Bohrungen oder Schlitze, Einsätze mit Bohrungen oder Schlitzen und/oder Einsätze aus durchlässigem Sintermetall vorgesehen, welche der Einleitung des zweiten Mediums in die Kavität zwischen Vorformling und Wandung des Werkzeuges oder Abzug des zweiten Mediums aus der Kavität dienen. Zur aktiven Entnahme des zweiten Mediums, d.h. Erzeugung von Unterdruck können beispielsweise auch Unterdruck-Ventile oder Pumpen eingesetzt, zur passiven Entnahme beispielsweise auch poröse Einsätze als Wandungsbereich aus Sinterwerkstoffen vorgesehen werden.

Vorteilhafte Weiterbildungen des erfindungsgemäßen Verfahrens sind den kennzeichnenden Merkmalen der Unteransprüche entnehmbar. Das erfindungsgemäße Verfahren ist mit Vorteil zur Herstellung von Hohlkörpern aus Vorformlingen aus thermoplastischen Kunststoffen, wie Polyethylen, Polypropylen, Polyvinylchlorid, Polystyrol, Polyoxymethylen, Polycarbonat, Polytherephtalat, Polymethyl-metacrylat, Polyamide und/oder deren Copolymere und Blends einsetzbar. Bevorzugt wird für das Aufblasmedium und das zweite Medium das gleiche Medium, wie beispielsweise ein gasförmiges Medium wie Luft verwendet. Bevorzugt wird das Aufblasmedium und/oder das zweite Medium temperiert.

Gemäß einem weiteren Vorschlag der Erfindung kann der Volumenstrom des zweiten Medium bzw. die Teilvolumenströme, welche zwischen Vorformling und Wandung des Werkzeuges in die Kavität eingebracht werden, in Abhängigkeit von dem ausgewählten thermoplastischen Kunststoff, dem Aufblasdruck, Größe, Gestalt und/oder Wanddicke des Vorformlings gesteuert werden.

Die Erfindung wird nachfolgend anhand der Zeichnung näher erläutert. Es zeigen:
- Figur 1: schematisch einen Querschnitt durch ein geschlossenes Werkzeug mit Bohrungen für das zweite Medium zum Einbringen in die Kavität des Werkzeuges
- Figur 2: Ausbildung eines Hohlkörpers in dem Werkzeug gemäß Figur 1 ausschließlich mit Aufblasluft
- Figur 3: schematische Darstellung der aktiven Beaufschlagung des Werkzeuges gemäß Figur 1 mit in die Kavität zwischen Vorformling und Wandung des Werkzeuges eingebrachtem zweiten Medium
- Figur 4: Ausbildung eines Hohlkörpers in dem Formwerkzeug gemäß Figur 3 mit Aufblasmedium und zusätzlichem in die Kavität zwischen Vorformling und Werkzeugwandung eingebrachtem zweiten Medium

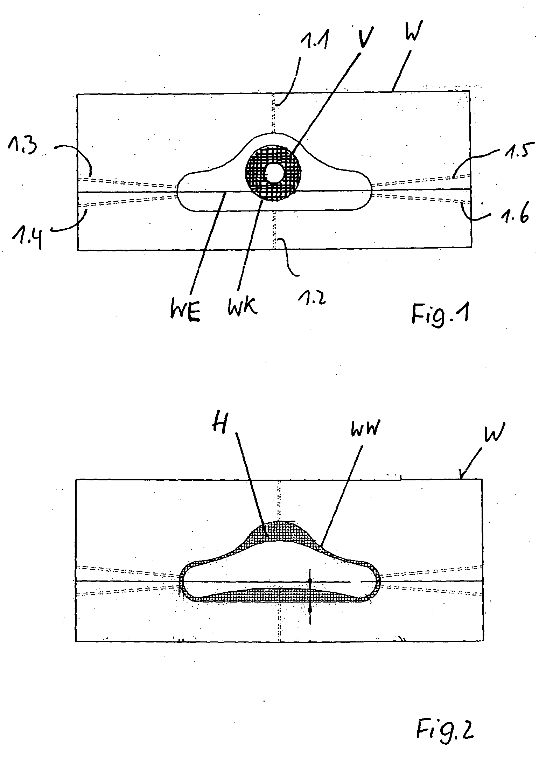

In der Figur 1 ist schematisch das Werkzeug W, welches mehrteilig und/oder auch aus Werkzeugsegmenten bestehen kann, dargestellt. In dem Beispiel ist die Werkzeugtrennebene WE ersichtlich. Das Werkzeug ist geschlossen. Das Werkzeug ist mit einer nicht dargestellten Einbringöffnung für einen Vorformling V und das Einbringen von Aufblasluft ausgestattet. Der Vorformling V wird von einem Abschnitt eines Schlauches mit rundem bis ovalem Querschnitt, der dickwandig ist, gebildet. Die Wanddicke des Vorformlings kann über den Umfang und Länge des Vorformlings variieren. Für die Eingabe und die Entnahme eines zweiten Mediums in die Kavität WK des Werkzeuges zwischen Vorformling und die die Kavität des Werkzeuges begrenzende Wandung WW sind Bohrungen 1.1, 1.2, 1.3, 1.4, 1.5, 1.6 an den gewünschten Bereichen ausgebildet. Diese Bohrungen können auch in Form von Formeinsätzen beispielsweise aus durchlässigem Sintermaterial je nach Anforderungen gebildet sein. In dem gezeigten Beispiel sind Bohrungen an den jeweils extrem weit vom Mittelpunkt des Werkzeuges entfernten Bereichen und in den mittelpunktnahen Bereichen vorgesehen.

In einem ersten Versuch wird ein Vorformling in die Form gemäß Figur 1 eingebracht und die Bohrungen 1.1 bis 1.6 sind geschlossen, d.h. es wird kein zusätzliches Medium hierüber in die Kavität des Werkzeuges eingebracht oder abgezogen. Nach dem Schließen des Werkzeuges wird der Vorformling durch Einblasen von Aufblasluft in das Innere des Vorformlings aufgeblasen, so lange, bis er an der die Kavität des Werkzeuges begrenzenden Wandung WW anliegt, wie aus der Figur 2 ersichtlich. Bei der extremen Gestalt und Zerklüftung des aus dem Vorformling V herzustellenden Hohlkörpers H, erfolgt eine sehr ungleichmäßige Materialverteilung, so daß die Wanddicke des erzeugten Hohlkörpers H über den Umfang betrachtet sich sehr unterschiedlich ausbildet. Bei dem gezeigten Beispiel gemäß Figur 2 wurden bei einem Hohlkörper aus Polyamid 6 nach dem Aufblasvorgang Wanddicken zwischen 0,9 und 3,4 mm an den dünnsten und dicksten Stellen ermittelt.

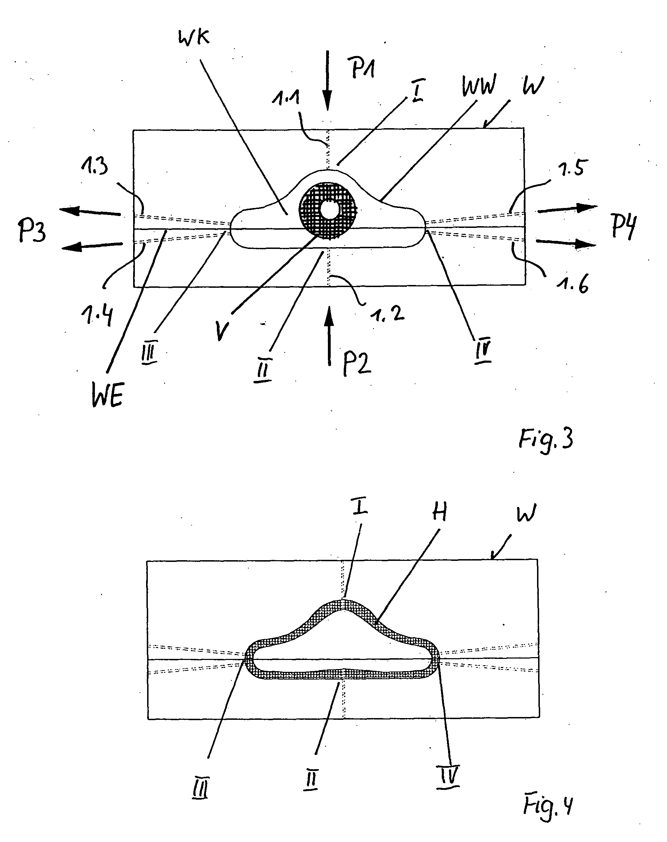

Im nächsten Versuch wurde, wie in der Figur 3 schematisch dargestellt, zusätzlich zu der in das Innere des Vorformlings eingebrachten Aufblasluft ein zweites Medium über die Bohrungen 1.1 bis 1.6 wie folgt zugeführt. In dem Bereich der ersten Annäherung des Vorformlings an die die Kavität begrenzende Wandung WW, nämlich im Bereich I und II wurde das zweite Medium unter Überdruck P1, P2 in die Kavität WK zwischen der die Kavität begrenzenden Wandung WW und den Vorformling, welcher nicht dargestellt ist, eingebracht, wodurch dem sich ausdehnenden Vorformling ein Widerstand entgegengesetzt wurde, der die Annäherung desselben an die Bereiche I und II verlangsamt. Gleichzeitig wurde in den Bereichen der letzten Annäherung III und IV des Vorformlings an die die Kavität begrenzende Wandung WW der Widerstand durch aktive Entnahme des zweiten Mediums in Pfeilrichtung P3, P4 reduziert, um auf diese Weise die Annäherung des Vorformlings an die Wandung WW zu beschleunigen.

Durch das Einbringen des zweiten Mediums P1 und P2 sowie die aktive Entnahme, P3, P4, insbesondere Absaugen und Erzeugung von Unterdruck wird radial und axial eine gleichmäßige Annäherung des sich durch das Aufblasen mittels Aufblasluft ausdehnenden Vorformlings an die Wandung WW erreicht. Das Medium P1, P2, P3, P4 bringt dabei den Vorformling in eine der Kontur des Werkzeuges angenäherte Geometrie, bevor dieser die Wandung WW abschließend berührt und durch die Abkühlung erstarrt. Eine Materialanhäufung durch vorzeitigen Kontakt mit der Wandung WW wird vermieden. Das Medium kann dabei ungehindert entweichen, um im fortschreitenden Formgebungsprozeß des Vorformlings Einschlüsse des Mediums zwischen Wandung WW und Vorformling zu verhindern.

In der Figur 4 ist schematisch die Ausbildung eines Hohlkörpers H aus einem Vorformling mit dem Werkzeug gemäß Figur 1, 3 dargestellt, bei dem zusätzlich zur Aufblasluft in den Vorformling noch das zweite Medium in die Werkzeugkavität WK zwischen Vorformling und die die Werkzeugkavität begrenzende Wandung WW des Werkzeuges W eingebracht bzw. abgesaugt wurde, wie in Fig. 3 erläutert. Erfindungsgemäß wird ein dynamisches Luftpolster zwischen der Wandung des Werkzeuges und dem Vorformling durch das Aufblasmedium und das zweite Medium erzeugt. Es wurde eine hohe Gleichmäßigkeit der Wanddicke des Hohlkörpers H erreicht, d.h. eine erhebliche Vergleichmäßigung der Wanddicke über den Umfang hinweg, so daß die Wanddicke zwischen der dünnsten und der dicksten Stelle nur noch zwischen 1,9 bis 2,4 mm schwankte. Es wurde der gleiche Vorformling aus einem Polyamid 6 wie bei dem Vergleich gemäß Figur 2 eingesetzt.

Erfindungsgemäß kann der Volumenstrom nun angepaßt an den herzustellenden Hohlkörper und angepaßt an den Vorformling und das Material desselben in der Weise gesteuert werden, daß je größer der Vorformling ist, der durch Einblasen von Aufblasmedium in das Innere des Vorformlings ausgeformt wird, desto früher und stärker - mit höherem Druck - muß das zweite Medium in die Kavität des Werkzeuges zum Auslösen eines Widerstandes auf den Vorformling eingeführt werden. Andererseits gilt, daß je dicker der Vorformling ist, desto später, jedoch stärker muß das zweite Medium zugeführt werden, um einen Widerstand auf den Vorformling auszuüben. Bei sehr zähen Materialien kann es erforderlich sein, das zweite Medium relativ später, jedoch mit höherem Druck einzuführen, um den Vorformling entsprechend zu manipulieren. Gleichzeitig ist der mittels des zweiten Mediums aufzubauende Druck auch anzupassen an den Aufblasdruck, mit dem das Aufblasmedium in das Innere des Vorformlings eingeblasen wird, je schwächer der Aufblasdruck ist, desto später und auch entsprechend schwächer ist der Druckaufbau durch das zweite Medium, welches in die Kavität zwischen Vorformling und die Kavität begrenzende Wandung des Formwerkzeugs eingebracht wird, zu wählen.

Wenn der herzustellende Hohlkörper sehr komplexe Geometrien aufweist, sind mehrere Zonen/Bereiche zur Manipulation der Wandstärke des Vorformlings während des Aufblasens in dem Werkzeug zu installieren. Diese Bereiche können mit unterschiedlichen Volumenströmen - Teilvolumenströmen - des zweiten Mediums beaufschlagt und zu unterschiedlichen Zeiten und für unterschiedliche Zeiträume angesteuert werden.

Erfindungsgemäß wird durch die Minimierung der Wandstärkenvarianz oder die gezielte Anhebung und Verminderung je nach Funktion des Hohlkörpers der Materialeinsatz mittels des Vorformlings optimiert. Bezogen auf die Funktion werden nicht nur Material- und Transportkosten reduziert, sondern bei Verwendung werden die Hohlkörper leichter, sind damit leichter zu bewegen und sparen beispielsweise bei Einsatz in Kraftfahrzeugen für dieselben Antriebsenergie. Die Minimierung der Varianz der Wanddicke des herzustellenden Hohlkörpers verkürzt die von der maximalen Wanddicke abhängende Kühl- bzw. Zykluszeit und damit die Prozeßkosten durch eine kürzere Taktzeit. Des weiteren werden auch innere Spannungen im Hohlkörper reduziert und auch die optische Qualität verbessert.

## Patentansprüche

1. Verfahren zum Herstellen von Hohlkörpern aus einem hohlen plastifizierten Vorformling aus thermoplastischem Kunststoff, bei dem der Vorformling in eine Kavität eines Werkzeuges eingebracht und während/und/oder nach Schließen des Werkzeuges durch Einbringen eines flüssigen oder gasförmigen Aufblasmediums unter Druck in das Innere des Vorformlings unter Volumenvergrößerung bis zur Anlage an der die Kavität begrenzenden Wandung expandiert, und bei dem der Vorformling durch einzweites in die Kavität des Werkzeuges zwischen Vorformling und Wandung des Werkzeuges eingebrachtes flüssiges oder gasförmiges Medium positioniert wird, **dadurch gekennzeichnet, daß** das zweite Medium in Teilvolumenströmen an mindestens zwei Bereichen des Werkzeuges in die Kavität eingebracht und/oder entnommen wird, und die Teilvolumenströme des zweiten Mediums einzeln in Bezug auf den zu erzeugenden Überdruck und/oder Unterdruck gesteuert werden, in der Weise, daß zur Verlangsamung der Annäherung des Vorformlings an die Wandung des Werkzeuges in den Bereichen, in denen sich der Vorformling während des Expandierens durch Einblasen von Aufblasmedium zuerst der die Kavität begrenzenden Wandung des Werkzeuges nähert, mittels des zweiten Mediums ein Überdruck erzeugt wird und in den Bereichen, in denen sich der Vorformling beim Expandieren zuletzt der die Kavität begrenzenden Wandung des Werkzeuges nähert, mittels des zweiten Mediums ein Unterdruck zur Beschleunigung der Annäherung erzeugt wird und die Annäherung des Vorformlings beim Expandieren an die die Kavität begrenzende Wandung des Werkzeuges und der Erstarrungsvorgang vergleichmäßigt wird und die Varianz der Wanddicke des durch Expandieren des Vorformlings erhaltenen Hohlkörpers über seinen Umfang hin betrachtet verringert wird.

2. Verfahren nach Anspruch 1, **dadurch gekennzeichnet, daß** während des Aufblasens des Vorformlings mit Aufblasmedium eine gesteuerte Entnahme des zweiten Mediums aus der Kavität zwischen Wandung des Werkzeuges und Vorformling durchgeführt wird.

3. Verfahren nach Anspruch 1, **dadurch gekennzeichnet, daß** für das Aufblasmedium und das zweite in die Kavität eingebrachte Medium das gleiche Medium verwendet wird.

4. Verfahren nach einem der Ansprüche 1 bis 3, **dadurch gekennzeichnet, daß** als Aufblasmedium und/oder als zweites Medium Luft verwendet wird.

5. Verfahren nach einem der Ansprüche 1 bis 4, **dadurch gekennzeichnet, daß** das Aufblasmedium und/oder das zweite Medium temperiert werden.

6. Verfahren nach einem der Ansprüche 1 bis 5, **dadurch gekennzeichnet, daß** das zweite Medium über geeignete Bohrungen oder Schlitze, Einsätze mit Bohrungen oder Schlitzen und/oder Einsätze aus durchlässigem Sintermaterial, welche in den Bereichen des Werkzeuges, in denen die zu manipulierenden Wanddicken des Vorformlings zur Anlage an die Wandung des Werkzeuges kommen, vorgesehen sind, eingeleitet oder entnommen wird.

7. Verfahren nach einem der Ansprüche 1 bis 6, **dadurch gekennzeichnet, daß** die Teilvolumenströme des zweiten Mediums in Abhängigkeit von dem ausgewählten thermoplastischen Kunststoff, dem Aufblasdruck, Größe, Gestalt und/oder Wanddicke des Vorformlings gesteuert werden.

8. Verfahren nach einem der Ansprüche 1 bis 7, **dadurch gekennzeichnet, daß** Vorformlinge aus thermoplastischen Kunststoffen, wie Polyethylen, Polypropylen, Polyvinylchlorid, Polystyrol, Polyoxymethylen, Polycarbonat, Polytherephtalate, Polymethylmetacrylate, Polyamide und/oder deren Copolymere und Blends zum Herstellen der Hohlkörper verwendet werden.
